# EUROPEAN PATENT APPLICATION

(11) **EP 4 354 597 A1**
(43) Date of publication of application: **17.04.2024**
(21) Application number: 22916602.0
(22) Date of filing: 21.12.2022
(51) Int. Cl.: H01M 10/6561, H01M 50/202, H01M 10/613

(54) **BATTERY PACK, AND ENERGY STORAGE SYSTEM AND VEHICLE COMPRISING BATTERY PACK**

(30) Priority: 27.12.2021 KR 20210188570
(71) Applicant: LG Energy Solution, Ltd., Seoul 07335 (KR)
(72) Inventor: KIM, Seung-Hyun, Daejeon 34122 (KR); OH, Young-Hoo, Daejeon 34122 (KR); OK, Seung-Min, Daejeon 34122 (KR); JO, Sang-Hyun, Daejeon 34122 (KR); CHO, Young-Bum, Daejeon 34122 (KR); HONG, Sung-Goen, Daejeon 34122 (KR)
(74) Representative: Plasseraud IP
(86) International application number: PCT/KR2022/021000
(87) International publication number: WO 2023/128460

(57) **Abstract**

A battery pack with improved safety is provided according to an embodiment of the present disclosure. The battery pack according to an embodiment of the present disclosure includes a plurality of battery modules having at least one battery cell and provided in plurality to be arranged side by side with each other so that a predetermined gap is formed between facing battery modules.

## Description

### TECHNICAL FIELD

The present disclosure relates to a battery pack, and an energy storage system and a vehicle including the battery pack, and more particularly, to a battery pack with improved safety, and an energy storage system and a vehicle including the battery pack.

The present application claims priority to Korean Patent Application No. 10-2021-0188570 filed on December 27, 2021 in the Republic of Korea, the disclosures of which are incorporated herein by reference.

### BACKGROUND ART

Secondary batteries have high applicability according to product groups and electrical characteristics such as high energy density, and thus, are commonly applied not only to mobile devices but also to electric vehicles (EVs) or hybrid vehicles (HEVs) driven by electric power sources. Because secondary batteries may radically reduce the use of fossil fuel and do not generate any by-products that come with energy consumption, the secondary batteries are gaining attention as a new alternative energy source for improving eco-friendliness and energy efficiency.

Types of secondary batteries that are currently widely used include lithium-ion batteries, lithium polymer batteries, nickel cadmium batteries, nickel hydride batteries, and nickel zinc batteries. An operating voltage of a unit secondary battery cell, that is, a unit battery cell, ranges from about 2.5 V to about 4.5 V. Accordingly, when a higher output voltage is required, a battery pack may be configured by connecting a plurality of battery cells in series. Also, a battery pack may be configured by connecting a plurality of battery cells in parallel according to charge/discharge capacity required for the battery pack. Accordingly, the number of battery cells included in a battery pack may be set in various ways according to a required output voltage or charge/discharge capacity.

Meanwhile, when a battery pack is configured by connecting a plurality of battery cells in series/parallel, a method of first configuring a battery module including at least one battery cell and adding other elements by using the at least one battery module to configure a battery pack or a battery rack is general.

In addition, recently, as issues such as power shortage or eco-friendly energy have emerged, an energy storage system (ESS) for storing generated power has received a lot of attention. Typically, when such an energy storage system is used, it is easy to construct a power management system such as a smart grid system, so that power supply and demand can be easily controlled in a specific region or city. In addition, as commercialization of electric vehicles is in full swing, such an energy storage system can be applied to electric charging stations capable of charging electric vehicles.

In the case of a battery pack used in such an energy storage system, a plurality of battery modules may be accommodated in an inner space of a pack case. In addition, each battery module may be connected in series and/or parallel to each other to increase the output or capacity of the battery pack. Moreover, in order to increase the energy density of the battery pack, battery modules may exist in a dense state with each other in a very narrow space.

Here, at least one battery module constituting a conventional battery pack generally includes a plurality of battery cells stacked on each other and a module housing accommodating the plurality of battery cells.

In the case of such a conventional battery pack, when overheating occurs in a specific battery cell among the plurality of battery cells of the battery module due to an abnormal situation, the heat generated in the overheated battery cell is transferred to adjacent battery cells as it is, resulting in thermal runaway, which may lead to a greater risk of explosion of adjacent battery modules.

In particular, in the case of a conventional battery pack, the pack case is configured in the form of a box or a mono frame (tube), and a plurality of battery modules are accommodated in the inner space of the pack case in many cases. However, in such a conventional battery pack configuration, the pack case may cause a problem of increasing heat transfer between battery modules.

That is, heat generated from an event module, which is a battery module in which a thermal event occurs, may be directly transferred to an adjacent battery module through a method such as thermal radiation, or may be transferred through a pack case through a heat conduction method. In particular, when heat passes through the pack case, a problem in which heat is transferred to a battery module that is not adjacent to the event module and is far away may occur.

As a result, according to the configuration of the conventional battery pack, heat transfer between a plurality of battery modules included in the pack case is easily performed, and there is a problem in that thermal runaway propagation is not properly suppressed. In addition, this thermal runaway propagation may cause a fire or spread a fire as well as failure or damage of a battery pack, which may cause great damage.

Therefore, it is required to find a way to provide a battery pack capable of preventing thermal runaway in the event of an abnormal situation of a battery module, and an energy storage system and a vehicle including the battery pack.

### DISCLOSURE

### Technical Problem

Therefore, the present disclosure is directed to providing a battery pack capable of preventing thermal runaway in the event of an abnormal situation of a battery module, and an energy storage system and a vehicle including the battery pack.

However, the technical problem to be solved by the present disclosure is not limited to the above-mentioned problem, and other problems not mentioned will be clearly understood by those skilled in the art from the present disclosure described below.

### Technical Solution

In one aspect of the present disclosure, there is provided a battery pack comprising: a plurality of battery modules having at least one battery cell and provided in plurality to be arranged side by side with each other so that a predetermined gap is formed between facing battery modules.

Also, preferably, the predetermined gap may act as an air curtain capable of preventing thermal runaway toward adjacent battery modules in the event of a thermal event due to an abnormal situation of at least one battery cell.

Also, preferably, the predetermined gap may be formed between battery modules facing each other along an arrangement direction of the plurality of battery modules.

Also, preferably, the predetermined gap may be formed with a predetermined length along a longitudinal direction of the plurality of battery modules.

Also, preferably, the width of the predetermined gap may be 12 mm or less between the facing battery modules.

Also, preferably, the predetermined gap may be formed in plurality between facing battery modules, and the plurality of predetermined gaps may be spaced apart from each other by a predetermined distance along a longitudinal direction of the battery module.

Also, preferably, the battery pack may comprise a phase change member provided within the predetermined gap.

Also, preferably, the battery pack may comprise a cooling unit provided within the predetermined gap and having a cooling channel through which a cooling fluid flows.

In addition, the present disclosure provides an energy storage system comprising the battery pack according to the above embodiments.

In addition, the present disclosure provides a vehicle comprising the battery pack according to the above embodiments.

### Advantageous Effects

According to various embodiments as described above, it is possible to provide a battery pack capable of preventing thermal runaway in the event of an abnormal situation of a battery module, and an energy storage system and a vehicle including the battery pack.

In particular, when heat is generated in a specific battery module due to an event such as thermal runaway, the generated heat may be effectively blocked from being transferred to other adjacent modules.

Therefore, according to this aspect of the present disclosure, the thermal safety of the battery pack may be further improved.

In addition, various additional effects can be achieved by various embodiments of the present disclosure. Various effects of the present disclosure will be described in detail in each embodiment, or descriptions of effects that can be easily understood by those skilled in the art will be omitted.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a view for describing a battery pack according to an embodiment of the present disclosure.
FIG. 2 is an exploded perspective view of the battery pack of FIG. 1.
FIG. 3 is an enlarged view of the main part of the battery pack of FIG. 1.
FIG. 4 is a cross-sectional view of the main part of the battery pack of FIG. 1.
FIG. 5 is a perspective view showing one battery module included in the battery pack of FIG. 1.
FIG. 6 is a partial perspective view in which some components of the battery module of FIG. 5 are separated or removed.
FIG. 7 is a diagram for explaining a forced convection mechanism for preventing thermal runaway of the battery pack of FIG. 1.
FIG. 8 is a view for describing a battery pack according to another embodiment of the present disclosure.
FIG. 9 is a view for describing a battery pack according to still another embodiment of the present disclosure.
FIG. 10 is a view for describing a battery pack according to still another embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

Meanwhile, in the present specification, terms indicating directions such as up, down, left, right, front, and back may be used, but these terms are only for convenience of description, and it is obvious to those skilled in the art that they may vary depending on the location of the target object or the location of the observer.

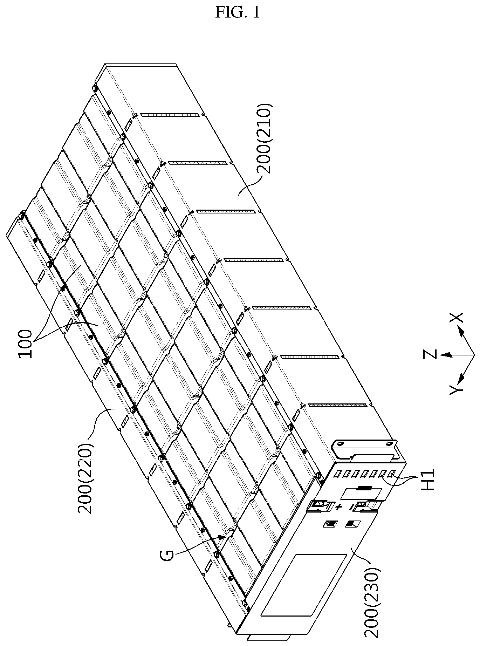

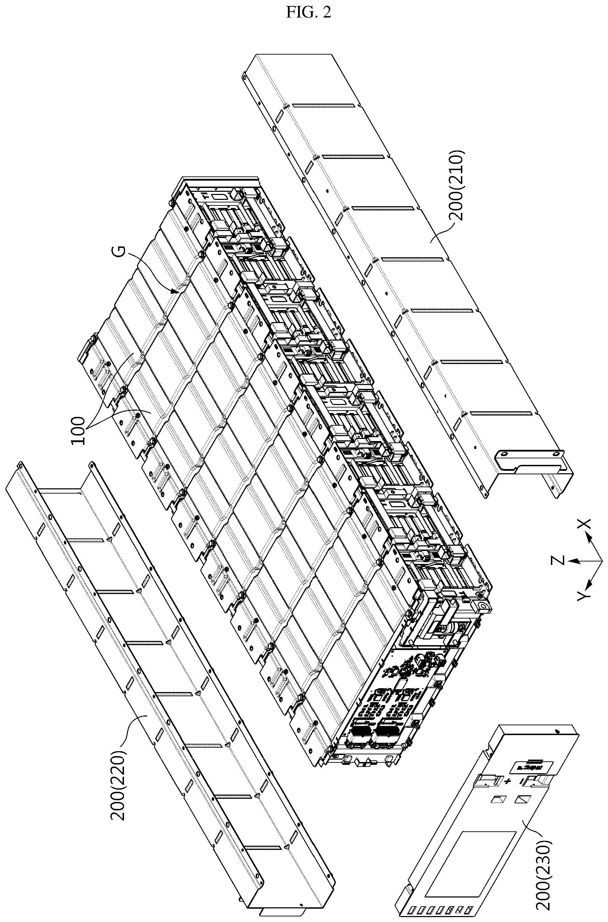

FIG. 1 is a view for describing a battery pack according to an embodiment of the present disclosure, and FIG. 2 is an exploded perspective view of the battery pack of FIG. 1.

Referring to FIGS. 1 and 2, a battery pack may include a plurality of battery modules 100.

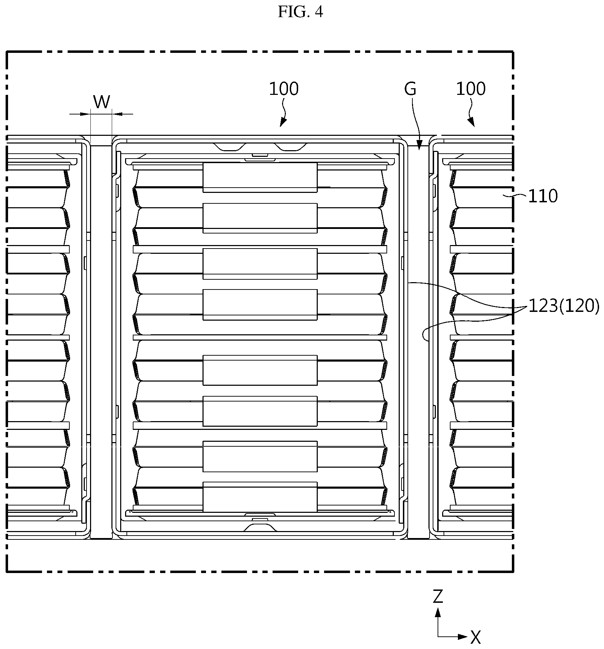

Each battery module 100 may include at least one battery cell (110, see FIG. 4) to store and release energy. Here, each battery cell 110 may mean a secondary battery.

Also, a plurality of battery modules 100 may be included in a battery pack. In particular, in order to improve the capacity and/or output of the battery pack, a plurality of battery modules 100 may be included in the battery pack as shown in FIGS. 1 and 2. In this case, the plurality of battery modules 100 may be stacked in at least one direction. As an example, FIGS. 1 and 2 show a form in which eight battery modules 100 are arranged in an X-axis direction (left and right direction).

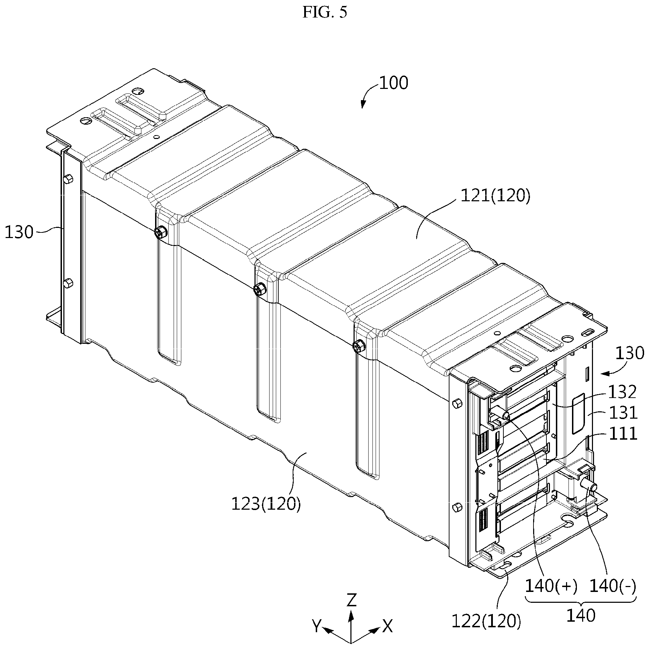

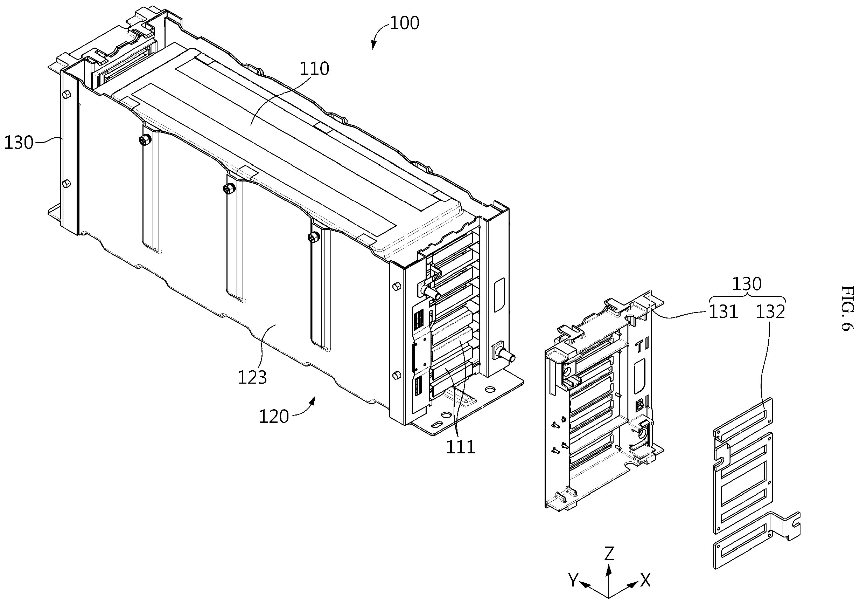

An example of a more specific configuration of the battery module 100 is shown in more detail in FIGS. 5 and 6.

The plurality of battery modules 100 may be provided in plurality and arranged side by side with each other. In this plurality of battery modules 100, a predetermined gap G may be formed between the facing battery modules 100.

The predetermined gap G may prevent heat transfer toward an adjacent battery module 100 when an abnormal situation such as thermal runaway due to overheating of at least one battery module 100 occurs.

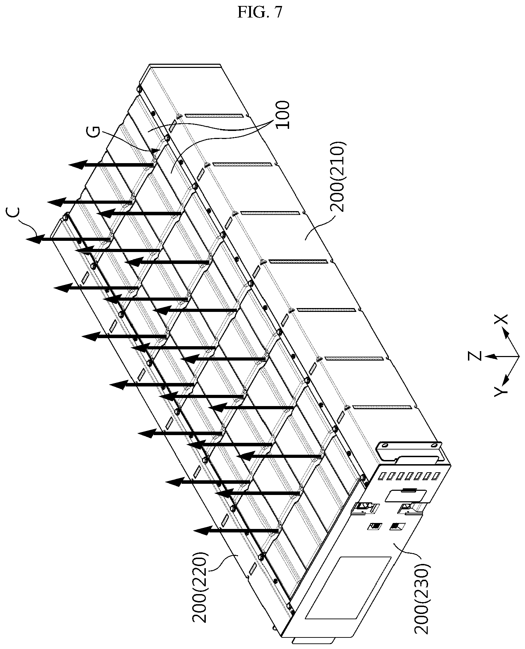

Specifically, the predetermined gap G may act as an air curtain (C, see FIG. 7) that causes forced convection to prevent thermal runaway toward the adjacent battery module 100 in the event of a thermal event due to an abnormal situation of at least one battery cell 110 of at least one battery module 100. That is, the predetermined gap G may be provided to communicate air.

Accordingly, in this embodiment, when heat is generated in a specific battery module 100 due to an event such as thermal runaway, through the predetermined gap G, the generated heat may be effectively blocked from being transferred to other adjacent battery modules 100.

Therefore, in this embodiment, through the predetermined gap G, the thermal stability of the battery pack may be further improved.

Hereinafter, the predetermined gap G according to this embodiment will be described in more detail.

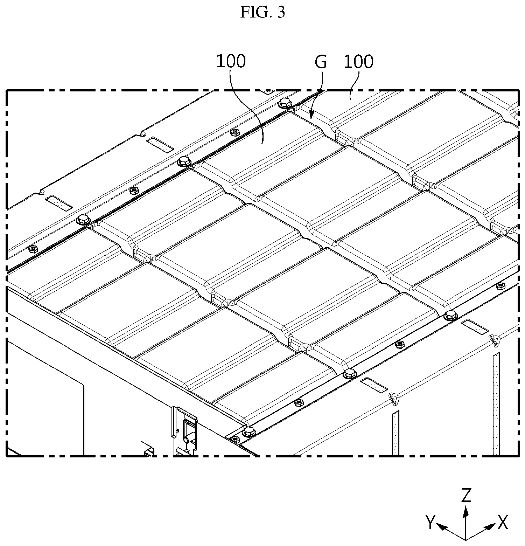

FIG. 3 is an enlarged view of the main part of the battery pack of FIG. 1, and FIG. 4 is a cross-sectional view of the main part of the battery pack of FIG. 1.

Referring to FIGS. 3 and 4 and FIGS. 1 and 2 above, the predetermined gap G may be formed between battery modules 100 that face each other along an arrangement direction (X-axis direction) of the plurality of battery modules 100. Accordingly, the predetermined gap G may be provided between the facing battery modules 100 in the arrangement direction (X-axis direction) of the plurality of battery modules 100.

Therefore, even if a thermal runaway situation occurs in any battery module 100 among the plurality of battery modules 100 arranged to face each other, heat transfer to an adjacent battery module 100 may be effectively prevented.

The predetermined gap G may be formed with a predetermined length along the longitudinal direction (Y-axis direction) of the plurality of battery modules 100. Specifically, the predetermined gap G may be formed with a length corresponding to the entire length in the longitudinal direction (Y-axis direction) of the battery module 100.

In addition, the height of the predetermined gap G may be formed to a height corresponding to the entire length in the Z-axis direction of the battery module 100.

Accordingly, the predetermined gap G forms a gap anywhere between the facing battery modules 100 in the longitudinal direction (Y-axis direction) of the battery module 100, thereby equally deriving the thermal transfer blocking efficiency anywhere in the longitudinal direction (Y-axis direction) of the battery module 100.

Here, the width W of the predetermined gap G may be 12 mm or smaller between the facing battery modules 100. Through the width W of this gap G, forced convection to function as an air curtain (C, see FIG. 7) may be more effectively generated.

In addition, the operating direction of the air curtain C may be the upper side (+Z-axis direction) or the lower side (-Z-axis direction) of the battery pack. That is, as long as the forced convection can occur, the operating direction of the air curtain C may be either the upper side (+Z-axis direction) or the lower side (-Z-axis direction) of the battery pack.

FIG. 5 is a perspective view showing one battery module included in the battery pack of FIG. 1, and FIG. 6 is a partial perspective view in which some components of the battery module of FIG. 5 are separated or removed.

Referring to FIGS. 5 and 6 and FIGS. 1 to 4 above, the battery module 100 may include a battery cell 110 (secondary battery).

Here, the battery cell 110 may include an electrode assembly, an electrolyte solution (electrolyte), and a battery case. Although a pouch-type secondary battery is shown in FIGS. 5 and 6, other types of secondary batteries, such as cylindrical batteries or prismatic batteries, may be included in the battery module 100. Hereinafter, in this embodiment, the battery cell 110 is limited to being provided as a pouch-type secondary battery.

Such a secondary battery may be included in plurality. For example, as shown in the drawing, the cell assembly may be configured in a form in which a plurality of pouch-type secondary batteries are stacked in a vertical direction in a state in which the plurality of pouch-type secondary batteries are laid down. At this time, the electrode leads 111 of each battery may be in direct contact with each other or electrically connected through a bus bar or the like.

In addition, the battery module 100 may include a module terminal 140. For example, in the battery module 100, the electrode leads 111 of each battery cell 110 may be located on the front and/or rear side, and the module terminal 140 may be located in a form electrically connected to the electrode lead 111.

In particular, the module terminal 140 is located on the front and/or rear side of the battery module 100 and may be configured to protrude forward and/or rearward. Moreover, each battery module 100 may include a positive electrode module terminal (+) and a negative electrode module terminal (-) as the module terminal 140. At this time, the positive electrode module terminal (+) and the negative electrode module terminal (-) may be located on the same side of the battery module 100, for example, on the front (-Y-axis direction) side as shown in the drawing.

The module terminal 140 may allow the secondary battery (battery cell 110) included in the battery module 100 to be electrically connected to other components outside the battery module 100, such as other battery modules 100.

The battery module 100 may include a module case 120 and a bus bar assembly 130.

Here, the module case 120 may be configured to accommodate at least one secondary battery in an inner space. For example, the module case 120 may include an upper plate 121, a lower plate 122, and a side plate 123 as shown in the drawing. In addition, the plurality of plates may be coupled to each other to accommodate the battery assembly in a limited inner space.

Here, some plates included in the module case 120, such as the lower plate 122 and the side plate 123 (left plate, right plate), may be integrated with each other. In this case, the integrated shape of the lower plate 122 and the side plate 123 may be approximately U-shaped.

Alternatively, the lower plate 122, the side plate 123, and the upper plate 121 may be configured in a tubular and monoframe form integrated with each other. Each plate of the module case 120 may define an inner space in a state of being coupled to each other. In addition, the cell assembly may be accommodated in this inner space.

The module case 120 may be configured such that at least one side is open. In addition, the electrode lead 111 of the cell assembly may be positioned in this open portion.

In particular, the battery module 100 may include a bus bar assembly 130 to be coupled to the open portion of the module case 120. For example, as shown in FIGS. 5 and 6, the bus bar assembly 130 may be coupled to front and rear opening portions of the module case 120. The electrode leads 111 of the battery assembly may be located in the front and rear portions of the module case 120.

In addition, the bus bar assembly 130 may be coupled with the electrode lead 111. As a more specific example, the bus bar assembly 130 may include a bus bar housing 131 and a module bus bar 132 as shown in FIGS. 5 and 6.

Here, the bus bar housing 131 may be made of an electrically insulating material, such as a plastic material. In addition, the bus bar housing 131 may be configured such that the module bus bar 132 is seated and fixed.

Also, the module bus bar 132 may be made of an electrically conductive material, such as a metal material. In addition, the module bus bar 132 may be configured to electrically connect two or more electrode leads 111 or to transmit sensing information to a control unit such as a battery management system (BMS) by being connected to at least one electrode lead 111. The sensing information may be sensing information related to temperature and voltage of the battery cells 110.

As such, in the case of the battery module 100 included in the battery pack according to the present disclosure, only a specific portion, for example, the front side and the rear side where the bus bar assembly 130 is located may be opened and the remaining portions may be configured to be sealed.

In this case, when a venting gas or the like is generated inside the battery module 100, the venting gas may be induced to be discharged only to the open portion of the module case 120, for example, the front side and the rear side where the bus bar assembly 130 is located. In particular, a slit may be formed in the bus bar assembly 130 so that the electrode lead 111 can pass therethrough.

The pack case 200 may be provided on at least one side of the plurality of battery modules 100. In addition, the pack case 200 may be configured to cover at least a part of the outer side of the battery module 100.

Moreover, the pack case 200 may be configured to define an inner space and accommodate a plurality of battery module 100 in the inner space. That is, the pack case 200 may be configured to surround at least a part of the outer side of the stack of the battery modules 100.

For example, the pack case 200 may include a front case 210, a rear case 220, and a side case 230 as shown in FIGS. 1 and 2. In this case, the pack case 200 is located at the front end, the rear end, and the left side of the stack of the battery modules 100, and may be said to cover the corresponding portions of the stack of the battery modules 100.

A pack terminal may be provided on at least one side of the pack case 200. Such a pack terminal may function as a terminal capable of exchanging power with an external charging device or discharging device for the battery pack.

The pack case 200 may be configured to guide gas when gas is generated from at least one battery module 100 among the plurality of battery modules 100 included in the battery pack. In particular, the pack case 200 may guide the discharge direction of the gas by allowing the venting gas to flow along the inner surface.

In this case, it can be said that at least a part of the pack case 200 functions as a duct in the battery pack. In addition, in the pack case 200, a discharge hole H1 may be formed on at least one side so that the venting gas can be discharged to the outside.

In this configuration, the pack case 200 may include a melting member configured to be melted by the venting gas discharged from the battery module 100. That is, the venting gas discharged from the battery module 100 may have a high temperature. Furthermore, the venting gas discharged from the battery module 100 may include flames, sparks, high-temperature electrodes or active material particles. Therefore, the melting member may be melted by coming into contact with or becoming adjacent to this hot venting gas.

Hereinafter, the forced convection mechanism for preventing thermal runaway of the battery pack according to this embodiment will be described in more detail.

FIG. 7 is a diagram for explaining a forced convection mechanism for preventing thermal runaway of the battery pack of FIG. 1.

Referring to FIG. 7, when an abnormal situation occurs due to overheating of at least one battery cell (110, see FIG. 4) of at least one battery module 100 among the battery modules 100 of the battery pack, a dangerous situation such as thermal runaway may occur. At this time, if the heat is transferred toward battery modules 100 adjacent to the battery module 100 where the thermal event occurs, it may lead to a bigger accident such as explosion of the entire battery pack.

In this embodiment, thermal transfer toward battery modules 100 adjacent to the battery module 100 where an abnormal situation occurs may be effectively prevented through the predetermined gap G acting as an air curtain C in the event of such a thermal runaway.

According to the predetermined gap G, since the heat transfer toward adjacent battery modules 100 in the event of a thermal event is effectively blocked through the air curtain C that causes forced convection, it is possible to significantly prevent the risk of thermal transfer and the risk of thermal runaway that may be caused in chain toward adjacent battery modules 100.

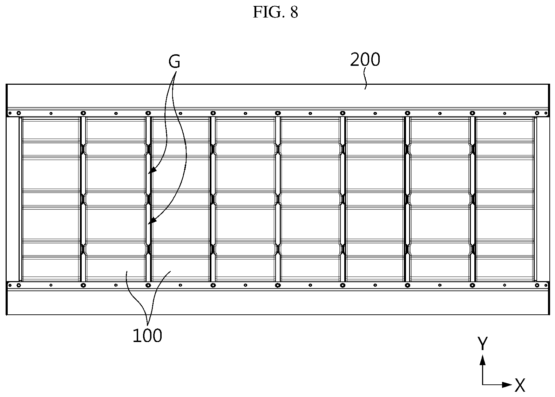

FIG. 8 is a view for describing a battery pack according to another embodiment of the present disclosure.

Since the battery pack according to this embodiment is similar to the battery pack of the previous embodiment, redundant description of components substantially the same as or similar to those of the previous embodiment will be omitted, and the following will focus on differences from the previous embodiment.

Referring to FIG. 8, in the battery pack, the predetermined gap G acting as an air curtain may be formed in plurality between the facing battery modules 100. Here, the plurality of predetermined gaps G may be spaced apart from each other by a predetermined distance along the longitudinal direction (Y-axis direction) of the battery modules.

The plurality of predetermined gaps G may be formed through an interdigitated arrangement of the facing battery modules 100. For example, the plurality of battery modules 100 may have at least one concave-convex portion in the arrangement direction (X-axis direction) to form the plurality of predetermined gaps G through mutual contact of adjacent concave-convex portions.

The plurality of predetermined gaps G may also be formed through concave-convex portions formed only on one battery module 100 among the facing battery modules 100. That is, it may also be possible that only one battery module 100 of the facing battery modules 100 has concave-convex portions, and such concave-convex portions are disposed to be in contact with the other battery module 100 of the facing battery modules 100.

That is, in this embodiment, the plurality of predetermined gaps G formed between the facing battery modules 100 may have a structure of a different shape other than the concave-convex structure, as long as a plurality of gap spaces can be formed between the facing battery modules 100.

As such, when the plurality of predetermined gaps G are arranged according to mutual stacking of the battery modules 100, it may be possible to form a plurality of gaps in the longitudinal direction (Y-axis direction) of the battery module 100.

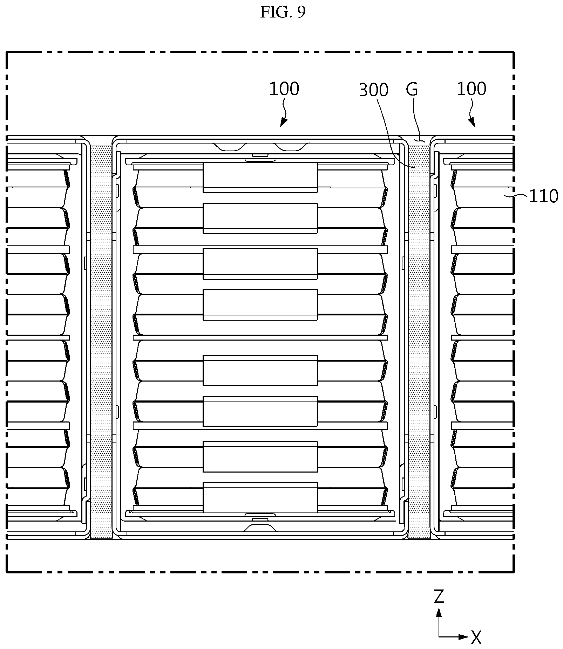

FIG. 9 is a view for describing a battery pack according to still another embodiment of the present disclosure.

Since the battery pack according to this embodiment is similar to the battery pack of the previous embodiment, redundant description of components substantially the same as or similar to those of the previous embodiment will be omitted, and the following will focus on differences from the previous embodiment.

Referring to FIG. 9, the battery pack may include a phase change member 300.

The phase change member 300 may be provided within the predetermined gap G.

The phase change member 300 may be disposed within the predetermined gap G in the height direction (Z-axis direction) of the battery modules 100. The phase change member 300 may have a length corresponding to the height of the battery modules 100.

The phase change member 300 may include a material capable of causing a phase change through vaporization and latent heat of a liquid. The phase change member 300 may act as a liquid curtain between the battery modules 100.

In this embodiment, through the phase change member 300 acting as the liquid curtain, heat transfer toward adjacent battery modules 100 may be effectively blocked in the event of an abnormal situation of the battery modules 100 of the battery pack.

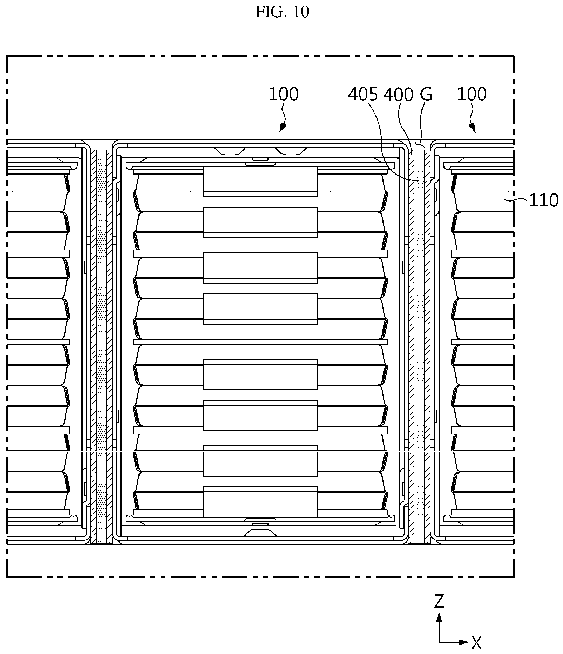

FIG. 10 is a view for describing a battery pack according to still another embodiment of the present disclosure.

Since the battery pack according to this embodiment is similar to the battery pack of the previous embodiment, redundant description of components substantially the same as or similar to those of the previous embodiment will be omitted, and the following will focus on differences from the previous embodiment.

Referring to FIG. 10, the battery pack may include a cooling unit 400.

The cooling unit 400 may be provided within the predetermined gap G.

The cooling unit 400 may be disposed within the predetermined gap G in the Z-axis direction of the battery modules 100. The cooling unit 400 may have a length corresponding to the height of the battery modules 100 and may be provided in communication with an external cooling device.

The cooling unit 400 may include a cooling channel 405. The cooling channel 405 is formed along the Z-axis direction of the cooling unit 400 and may communicate with the external cooling device or the like to allow a cooling fluid to flow therein.

The cooling fluid may be provided as a cooling water, which is generally water. It is not limited thereto, and the cooling fluid may be provided as a phase change material through evaporation, latent heat, etc. of liquid, or other cooling materials for cooling the battery pack. In addition, it is of course possible that the cooling fluid is provided as a gas such as air as in the previous embodiment.

A flow direction of the cooling fluid through the cooling unit 400 may be at least one of an upper direction and a lower direction of the battery pack. That is, the flow direction of the cooling fluid may be determined as a direction for optimal cooling of the battery pack.

As such, in this embodiment, since the cooling unit 400 having a cooling channel 405 through which the coolant flows is disposed within the predetermined gap G, in the case of a thermal runaway situation of one battery module 100, thermal transfer toward adjacent battery modules 100 may be effectively blocked through the cooling unit 400.

The battery pack according to the present disclosure may further include various other components of the battery pack known at the time of filing the present disclosure. For example, the battery pack according to the present disclosure may further include components such as a battery management system (BMS), a current sensor, and a fuse.

An energy storage system according to the present disclosure may include one or more battery packs according to the present disclosure. In particular, the energy storage system may include a plurality of battery packs according to the present disclosure in a form electrically connected to each other in order to have a large energy capacity.

The energy storage system according to an embodiment of the present disclosure may be an industrial energy storage system, or a residential (building) energy storage system for home or office used to store energy in a house, office, or building.

In addition, the energy storage system according to the present disclosure may further include various other components of energy storage systems known at the time of filing of this application. Moreover, the energy storage system may be used in various places or devices, such as a smart grid system or an electric charging station.

Also, a vehicle according to the present disclosure may include at least one battery pack according to the present disclosure. In addition, the vehicle according to the present disclosure may further include various other components included in a vehicle in addition to the battery pack. For example, the vehicle according to the present disclosure may further include a vehicle body, a motor, and a control device such as an electronic control unit (ECU), in addition to the battery pack according to the present disclosure.

According to various embodiments as described above, it is possible to provide a battery pack capable of preventing thermal runaway in the event of an abnormal situation of a battery module 100, and an energy storage system and a vehicle including the battery pack.

While the preferred embodiments of the present disclosure have been shown and described, the present disclosure is not limited to the specific embodiments described above, various modifications may be made by one of ordinary skill in the art to which the present disclosure pertains without departing from the gist of the present disclosure as defined by the claims, and these modifications should not be individually understood from the technical feature or prospect of the present disclosure.

## Claims

1. A battery pack comprising:
a plurality of battery modules having at least one battery cell and provided in plurality to be arranged side by side with each other so that a predetermined gap is formed between facing battery modules.

2. The battery pack according to claim 1, wherein the predetermined gap acts as an air curtain capable of preventing thermal runaway toward adjacent battery modules in the event of a thermal event due to an abnormal situation of at least one battery cell.

3. The battery pack according to claim 1, wherein the predetermined gap is formed between battery modules facing each other along an arrangement direction of the plurality of battery modules.

4. The battery pack according to claim 1, wherein the predetermined gap is formed with a predetermined length along a longitudinal direction of the plurality of battery modules.

5. The battery pack according to claim 1, wherein the width of the predetermined gap is 12 mm or less between the facing battery modules.

6. The battery pack according to claim 1, wherein the predetermined gap is formed in plurality between facing battery modules, and
wherein the plurality of predetermined gaps are spaced apart from each other by a predetermined distance along a longitudinal direction of the battery module.

7. The battery pack according to claim 1, comprising a phase change member provided within the predetermined gap.

8. The battery pack according to claim 1, comprising a cooling unit provided within the predetermined gap and having a cooling channel through which a cooling fluid flows.

9. An energy storage system, comprising the battery pack according to any one of claims 1 to 8.

10. A vehicle, comprising the battery pack according to any one of claims 1 to 8.
